Europäisches Patentamt

European Patent Office

Office européen des brevets

(19)

(11) Numéro de publication : **0 043 328**
**B1**

(12) # FASCICULE DE BREVET EUROPÉEN

(45) Date de publication du fascicule du brevet :
26.09.84

(51) Int. Cl.³ : **G 21 C 19/20**, G 21 C 19/32

(21) Numéro de dépôt : **81401046.8**

(22) Date de dépôt : **30.06.81**

(54) **Installation de production d'énergie comportant plusieurs réacteurs nucléaires à neutrons rapides et un dispositif de chargement et de déchargement d'assemblages combustibles.**

(30) Priorité : **01.07.80 FR 8014637**

(43) Date de publication de la demande :
**06.01.82 Bulletin 82/01**

(45) Mention de la délivrance du brevet :
**26.09.84 Bulletin 84/39**

(84) Etats contractants désignés :
**BE DE FR GB IT LU NL**

(56) Documents cités :
**FR-A- 1 525 102**
**FR-A- 1 527 225**
**FR-A- 2 188 251**
**FR-A- 2 192 057**
**FR-A- 2 267 614**
**FR-A- 2 279 201**
**FR-A- 2 368 122**
**ENERGIE NUCLEAIRE, vol. 13, no. 3, 1971 Paris, FR**
**E. BENOIST et al.: "La centrale Phénix", pages 196-205**

(73) Titulaire : **NOVATOME**
**20, Avenue Edouard Herriot**
**F-92350 Le Plessis Robinson (FR)**

(72) Inventeur : **Plagnard, André**
**16, rue du Poitou**
**F-92120 Montrouge (FR)**

(74) Mandataire : **Bouget, Lucien et ai**
**CREUSOT-LOIRE 15, rue Pasquier**
**F-75383 Paris Cedex 08 (FR)**

Jouve, 18, rue St-Denis, 75001 Paris, France

### Description

L'invention concerne une installation de production d'énergie comportant plusieurs réacteurs nucléaires à neutrons rapides et un dispositif de chargement et de déchargement permettant le passage des assemblages combustibles entre une rampe primaire de chargement et de déchargement communiquant avec la cuve d'un réacteur à neutrons rapides et une rampe secondaire communiquant avec une zone de stockage ou de chargement des assemblages.

Dans le cas des réacteurs nucléaires à neutrons rapides, les assemblages combustibles constituant le cœur du réacteur nucléaire disposés dans la cuve de celui-ci doivent pouvoir être remplacés après un certain temps d'utilisation dans le réacteur.

Dans ce type de réacteur, on dispose donc de moyens permettant d'extraire les assemblages irradiés du cœur du réacteur puis de la cuve de celui-ci pour les transférer dans une zone de stockage et de décontamination ou dans un moyen de transport et de stockage provisoire.

Ces moyens d'extraction et de transfert décrits dans le FR-A 2 267 614 comportent généralement une machine de transfert disposée au-dessus de la cuve du réacteur permettant l'extraction des assemblages combustibles du cœur, leur transfert et leur dépôt dans une zone de la cuve du réacteur dans laquelle débouche une rampe de transport des assemblages appelée rampe primaire. Cette rampe primaire permet le transport des assemblages depuis la cuve du réacteur jusqu'à un dispositif de transfert appelé sas de chargement et de déchargement dans lequel l'assemblage peut être transféré dans une seconde rampe appelée rampe secondaire qui communique avec une zone de stockage des assemblages ou avec une zone de chargement de ces assemblages dans des moyens de transport ou de stockage temporaire.

Les assemblages sont déplacés à l'intérieur des rampes primaire et secondaire par des dispositifs de traction tels que des treuils.

Le sas de chargement et de déchargement renferme une rampe mobile fixée à un tourniquet permettant sa mise en rotation sous l'effet de moyens moteurs disposés à la partie supérieure du sas pour son déplacement par pivotement entre une position où la rampe mobile se trouve dans le prolongement de la rampe primaire et une position où cette rampe mobile se trouve dans le prolongement de la rampe secondaire.

Le dispositif de traction est généralement fixé sur le tourniquet et suit donc les mouvements de rotation de la rampe mobile.

D'autres dispositifs de déplacement des assemblages à l'intérieur des rampes primaire et secondaire peuvent également être fixés à ces rampes pour le déplacement des assemblages pendant une partie de leur transport entre la cuve et le sas de chargement ou entre le sas de chargement et de déchargement et la zone de stockage.

Certains sas de chargement et de déchargement comportent deux rampes mobiles dont la mise en rotation simultanée permet de faire passer chacune de ces rampes d'une position en communication avec la rampe primaire à une position où elle est en communication avec la rampe secondaire et inversement.

Des assemblages étant amenés par les dispositifs de traction à l'intérieur de la rampe mobile, on peut ainsi faire passer ces assemblages de la rampe primaire à la rampe secondaire.

Le sas de chargement et de déchargement et les dispositifs de transfert qui lui sont associés reposent sur la structure du réacteur sur laquelle sont fixées la cuve et les installations annexes du réacteur.

Ce sas est extrêmement encombrant et le coût de construction de cet élément intervient pour une part relativement importante dans le coût de construction du réacteur.

Par ailleurs, les périodes de fonctionnement de cet élément sont très espacées dans le temps puisqu'elles correspondent aux périodes pendant lesquelles on arrête le réacteur pour effectuer le rechargement en combustible. Le sas sert en effet non seulement au déchargement des assemblages irradiés mais au rechargement du réacteur en assemblages neufs, le mouvement de ces assemblages se faisant depuis la zone de stockage jusqu'au cœur du réacteur par l'intermédiaire des rampes secondaire et primaire.

Les dispositifs mécaniques du sas de chargement et de déchargement sont donc amenés à fonctionner à des moments extrêmement éloignés dans le temps, si bien qu'on ne peut être sûr du bon fonctionnement de ces organes mécaniques qui ont subi un arrêt de très longue durée.

La tendance actuelle dans la construction des réacteurs nucléaires à neutrons rapides est de grouper ces réacteurs, par exemple par deux ou quatre unités, sur un même site pour réduire certains investissements par la mise en commun de certains organes de ces réacteurs.

On n'a cependant jamais pensé à utiliser un même sas de chargement et de déchargement pour un ensemble comportant plusieurs réacteurs.

Le but de l'invention est donc de proposer une installation de production d'énergie comportant plusieurs réacteurs nucléaires à neutrons rapides implantés sur un même site comportant chacun une cuve renfermant le cœur du réacteur immergé dans du sodium liquide de refroidissement, une structure supportant la cuve, une rampe primaire de chargement et de déchargement des assemblages combustibles du cœur communiquant avec la cuve du réacteur et une rampe secondaire communiquant avec une zone de stockage ou de chargement des assemblages, ces rampes primaire et secondaire portées par la structure étant munies à leurs extrémités de moyens d'isolation, l'installation comprenant un dispositif de chargement et de déchargement d'assemblages combustibles constitué par un sas reposant sur la structure d'un réacteur, à l'intérieur duquel sont fixés un moyen de transfert constitué par au moins une rampe mobile entre une position en communication avec la rampe primaire et une position en communication avec la rampe secondaire grâce à des moyens moteurs et au moins un dispositif relié à la rampe mobile de déplacement des assemblages à l'intérieur des rampes, cette installation devant permettre de réduire le coût de construction des réacteurs nucléaires groupés sur le même site tout en assurant un service plus fréquent des éléments mécaniques du dispositif de chargement et de déchargement sur l'un quelconque des réacteurs nucléaires, tout en autorisant également une maintenance aisée du sas pendant le fonctionnement du réacteur.

Dans ce but, le dispositif de chargement et de déchargement suivant l'invention est amovible dans son ensemble, le sas étant constitué par une enceinte démontable, transportable et comportant des moyens de liaison et d'isolement, au niveau d'ouvertures pratiquées dans sa paroi, pour sa mise en communication avec les rampes primaire et secondaire d'un réacteur au niveau des extrémités de ces rampes munies de moyens d'isolation.

Afin de bien faire comprendre l'invention on va maintenant décrire à titre d'exemples non limitatifs, en se référant aux figures jointes en annexe plusieurs modes de réalisation d'une installation comportant un dispositif de transfert suivant l'invention, dans le cas de réacteurs nucléaires à neutrons rapides refroidi au sodium liquide.

La figure 1   représente de façon schématique l'ensemble du dispositif de transfert d'un assemblage entre le cœur du réacteur et une zone de stockage et de décontamination des assemblages, dans le cas d'un réacteur nucléaire comportant un sas de chargement et de déchargement suivant l'art antérieur.

La figure 2   représente dans une vue en coupe par un plan vertical de symétrie un dispositif de chargement et de déchargement d'une installation suivant l'invention dans sa position de service sur un réacteur nucléaire.

La figure 3   représente dans une vue en coupe identique à la vue de la figure 2 le même dispositif désaccouplé par rapport au réacteur nucléaire.

La figure 4   représente dans une vue en coupe identique aux vues des figures 2 et 3, un second mode de réalisation d'un dispositif de chargement et de déchargement d'une installation suivant l'invention, dans sa position désaccouplée par rapport au réacteur nucléaire.

La figure 5   représente un dispositif de chargement et de déchargement d'une installation suivant l'invention, selon un troisième mode de réalisation dans une vue en coupe par un plan vertical de symétrie, le dispositif de chargement et de déchargement étant dans sa position de service sur le réacteur nucléaire.

La figure 6   représente, dans une vue en coupe identique à la vue de la figure 5, le dispositif représenté sur cette figure dans sa position désaccouplée par rapport au réacteur nucléaire.

La figure 7   représente, dans une vue en coupe par un plan de symétrie, un premier mode de réalisation des moyens de liaison et d'isolement du sas, dans sa position en service sur le réacteur.

La figure 8   représente les moyens de liaison et d'isolement du sas représentés à la figure 7 dans leur position désaccouplée par rapport au réacteur nucléaire.

La figure 9   représente dans une vue en coupe un second mode de réalisation des moyens de liaison et d'isolement du sas.

La figure 10   représente les moyens de liaison et d'isolement du sas représentés à la figure 9 dans leur position désaccouplée par rapport au réacteur nucléaire.

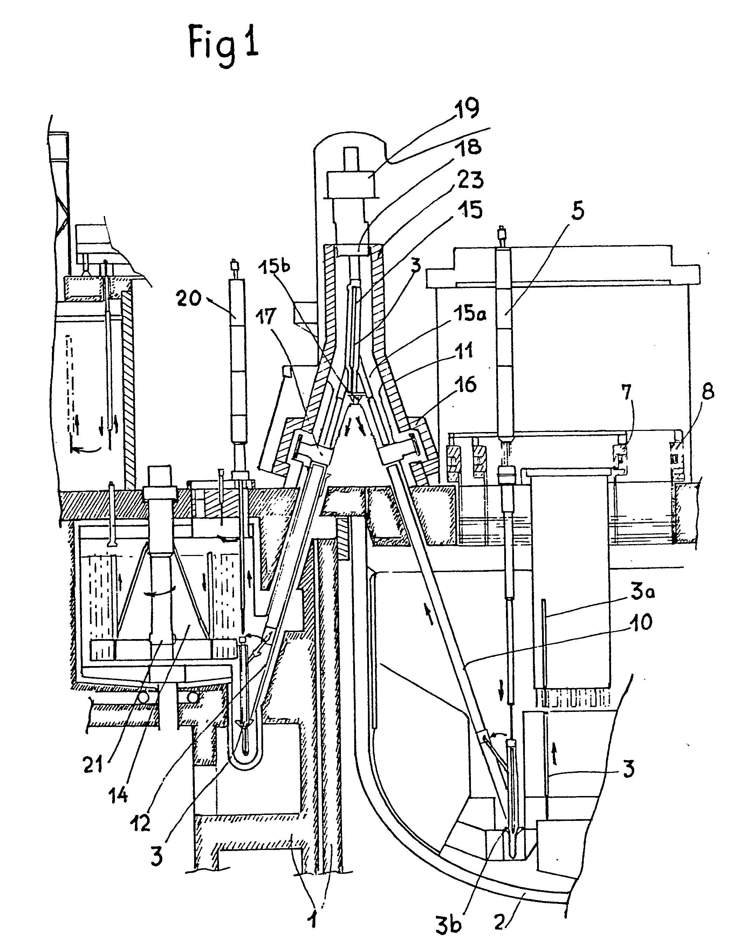

Sur la figure 1 on voit la structure 1 d'un réacteur nucléaire portant une cuve 2 à l'intérieur de laquelle sont disposés des assemblages 3 constituant le cœur du réacteur nucléaire.

Une machine de transfert 5 qui peut être déplacée en rotation pour venir occuper toute position au-dessus du réseau des assemblages combustibles grâce à des bouchons tournants 7 et 8 assure le transfert des assemblages 3 d'abord en position 3a grâce à des mouvements télescopiques de la machine de transfert puis en posibion 3b par rotation de la machine de transfert puis descente de l'assemblage à la verticale par des mouvements télescopiques.

En position 3b, l'assemblage peut être basculé dans une rampe 10 appelée rampe primaire qui débouche à sa partie supérieure dans un sas 11 à l'intérieur duquel débouche également une rampe 12 faisant communiquer le sas avec une zone de stockage 14.

L'isolement du sas par rapport aux rampes 10 et 12 peut être effectué grâce à des vannes 16 et 17.

Une rampe mobile en rotation 15 solidaire d'un plateau tournant 18 disposé à la partie supérieure du sas 11 peut venir se placer successivement en position 15a en communication avec la rampe primaire et en position 15b en communication avec la rampe secondaire.

Un assemblage 3 peut être amené à l'intérieur de cette rampe mobile depuis la rampe primaire ou depuis la rampe secondaire grâce à un treuil 19 surmontant le sas 11 appelé sas de chargement et de déchargement.

Le déplacement des assemblages à l'intérieur des rampes 10 et 12 et à l'intérieur du sas peut être effectué uniquement par le treuil 19 ou par le treuil 19 et d'autres treuils disposés à l'entrée des rampes primaire et secondaire.

A la sortie de la rampe 12, l'assemblage peut être pris en charge après basculement en position verticale, par une machine de transfert 20 qui peut déplacer l'assemblage 3 dans la direction verticale dans un sens et dans l'autre, ce qui permet de placer cet assemblage 3 dans une position quelconque à l'intérieur du barillet tournant de stockage 21 disposé à l'intérieur de la zone de stockage 14.

Inversement, des assemblages neufs disposés dans la zone de stockage peuvent être prélevés par la machine de transfert 20 et déposés dans la partie de cette zone qui permet de les basculer dans la rampe secondaire 12 pour l'introduction de ces assemblages dans la cuve du réacteur par l'intermédiaire du sas de chargement et de déchargement 11.

Le sas de chargement et de déchargement est disposé de façon permanente sur la structure 1 du réacteur nucléaire qui porte les rampes 10 et 12 débouchant dans le sas.

On voit que dans ce dispositif selon l'art antérieur, le sas de grande dimension forme un ensemble complexe et encombrant recouvert par les éléments 23 de grande épaisseur pour la protection des zones voisines du sas contre le rayonnement.

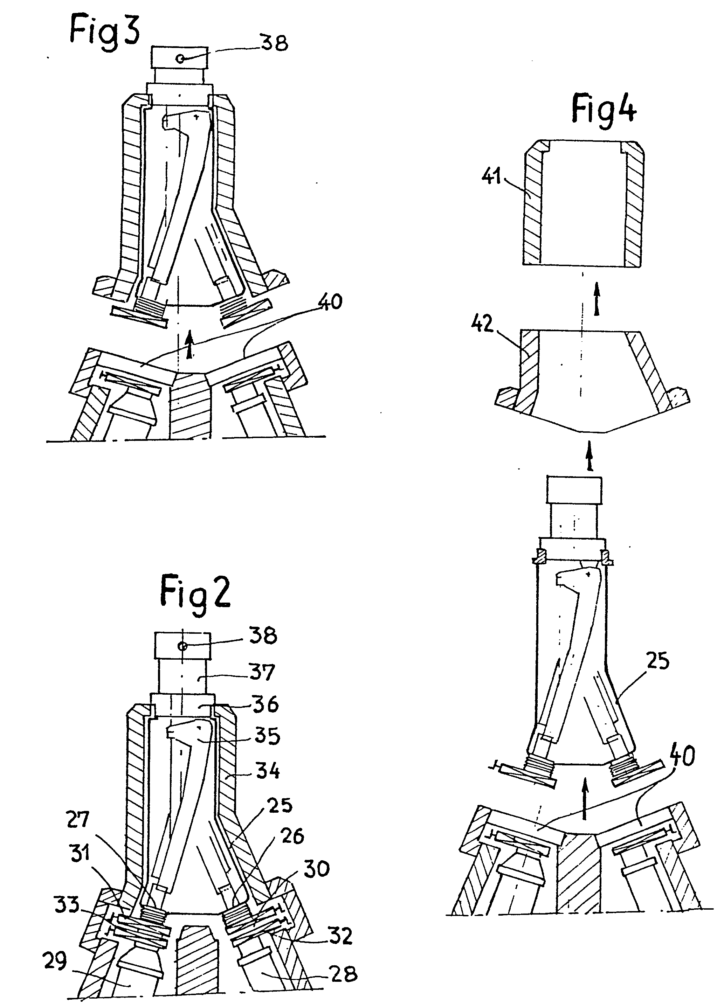

Sur les figures 2 et 3, on voit un dispositif de chargement et de déchargement suivant l'invention dans ses positions, en service sur le réacteur et désaccouplée par rapport à ce réacteur.

Un tel dispositif suivant l'invention comporte une enceinte fermée étanche 25 métallique comportant deux ouvertures 26 et 27 correspondant respectivement aux rampes primaire et secondaire 28 et 29 du réacteur sur lequel est placé le sas amovible suivant l'invention.

Des vannes 30 et 31 peuvent permettre de fermer ces ouvertures 26 et 27 situées sur l'enceinte, respectivement alors que des vannes 32 et 33 permettent de fermer les extrémités des rampes primaire et secondaire respectivement, ces rampes communiquant avec l'intérieur du réacteur et la zone de stockage.

Des brides de jonction disposées entre les vannes 30 et 32 et 31 et 33 respectivement permettent de fixer le sas amovible constitué par l'enceinte étanche 25 sur les rampes primaire et secondaire d'un réacteur nucléaire.

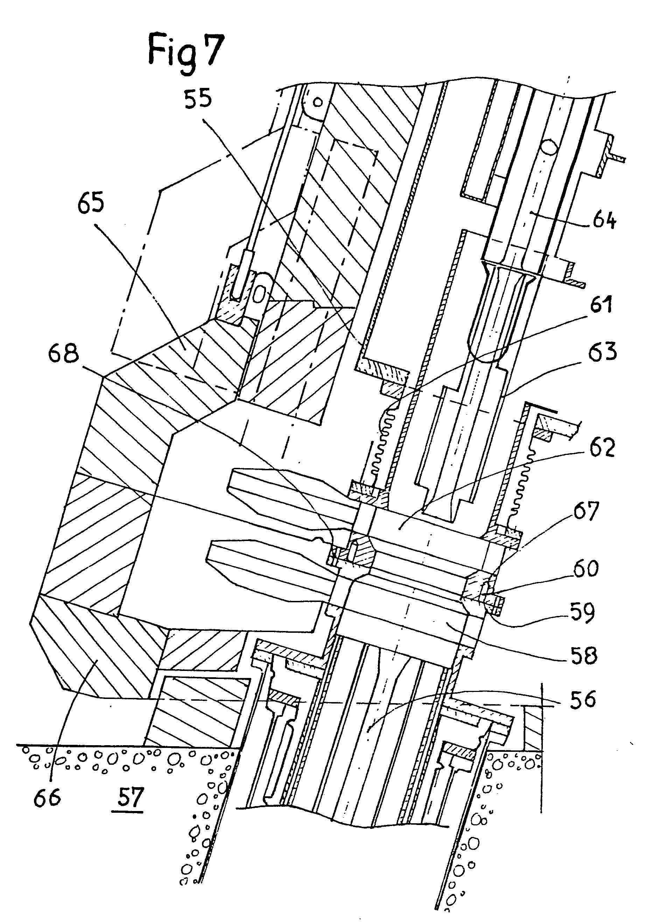

Le dispositif de jonction et d'isolation entre le sas et les rampes du réacteur sera décrit plus en détail en se référant aux figures 7, 8, 9 et 10.

L'enceinte 25 est recouverte par des éléments 34 assurant l'isolation contre les radiations, de l'extérieur du sas par rapport à l'intérieur.

Une rampe mobile 35 est disposée à l'intérieur du sas sur un élément tournnant 36 qui permet de mettre cette rampe en communication soit avec la rampe primaire 28 soit avec la rampe secondaire 29.

Au-dessus de l'ensemble tournant 36 est disposé un treuil 37 qui permet le déplacement des assemblages combustibles à l'intérieur des rampes soit dans le sens de la montée soit dans le sens de la descente.

Sur la figure 3, on voit que lorsque le désaccouplement entre le sas amovible et le réacteur a été effectué par démontage de la bride d'assemblage disposée entre les vannes d'isolation, on peut soulever le sas amovible grâce à un pont roulant, des éléments de prise 38 étant prévus à la partie supérieure du sas.

Dans le cas où plusieurs réacteurs nucléaires sont disposés sur un même site, il est possible de transporter le sas amovible sur un autre réacteur nucléaire où l'accouplement avec les rampes primaire et secondaire peut être effectué. Les ouvertures de la structure du réacteur nucléaire d'où l'on vient d'enlever le sas sont refermées par les plaques d'isolation contre les rayonnements 40.

Sur la figure 4, on a représenté un sas amovible identique au sas représenté sur les figures 2 et 3 mais dont les éléments d'isolation contre les rayonnements sont constitués en deux parties séparées 41 et 42 qui peuvent être mises en place sur l'enceinte 25 ou au contraire séparées de celle-ci indépendamment l'une de l'autre.

En effet l'ensemble du sas et de ses éléments d'isolation contre les rayonnements est d'un très grand poids, par exemple 400 à 500 tonnes et il peut être difficile de disposer de moyens de levage suffisants pour soulever l'ensemble du sas au-dessus du réacteur et pour le déplacer vers une nouvelle position de service au-dessus d'un autre réacteur.

Dans le cas du dispositif représenté à la figure 4, avant de soulever le sas au-dessus du réacteur pour son transport, on effectue donc un levage des pièces 41 et 42 qui sont transportées dans un endroit proche du réacteur nucléaire sur lequel on va disposer le sas, avant d'effectuer le levage et le transport de celui-ci comme représenté à la figure 4.

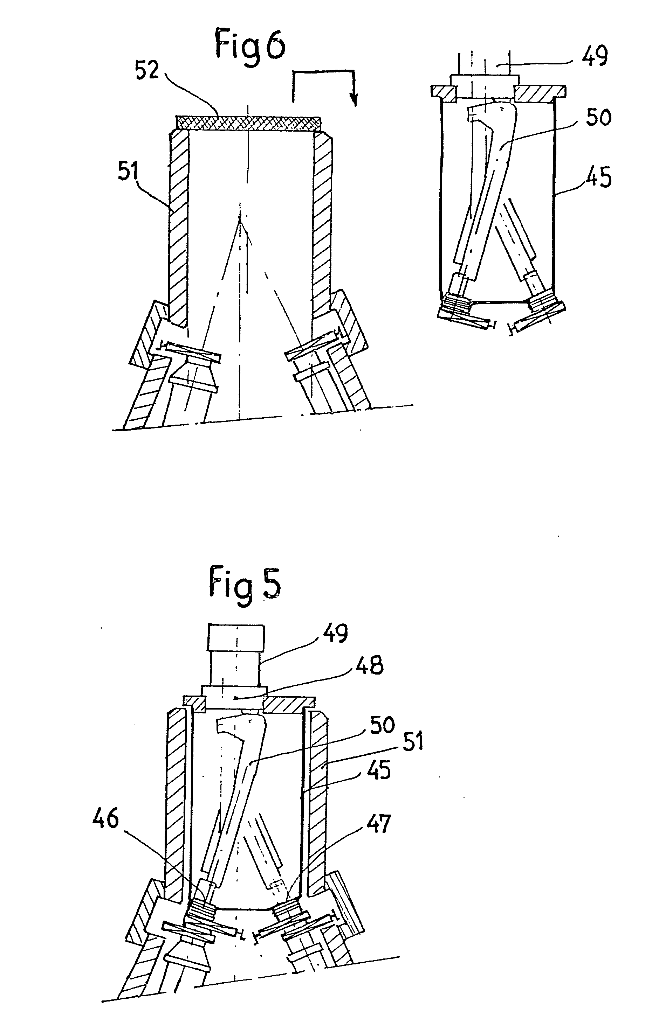

Sur les figures 5 et 6, on a représenté un autre mode de réalisation de l'enceinte du sas amovible, cette enceinte 45 étant constituée par un cylindre comportant deux ouvertures 46 et 47 à sa partie inférieure et un ensemble 48 pour le déplacement de la rampe mobile 50 ainsi qu'un treuil 49 à sa partie supérieure.

Ainsi qu'il est visible à la figure 6, cet ensemble peut être déconnecté des rampes primaire et secondaire du réacteur et extrait de la structure de protection 51 constituée par un cylindre de forte épaisseur en matériau isolant disposé à poste fixe sur le réacteur et dont la section droite correspond à la section droite de l'enceinte.

Une plaque 52 de protection complémentaire est alors disposée sur la partie supérieure du cylindre 51 pour isoler totalement l'intérieur du réacteur.

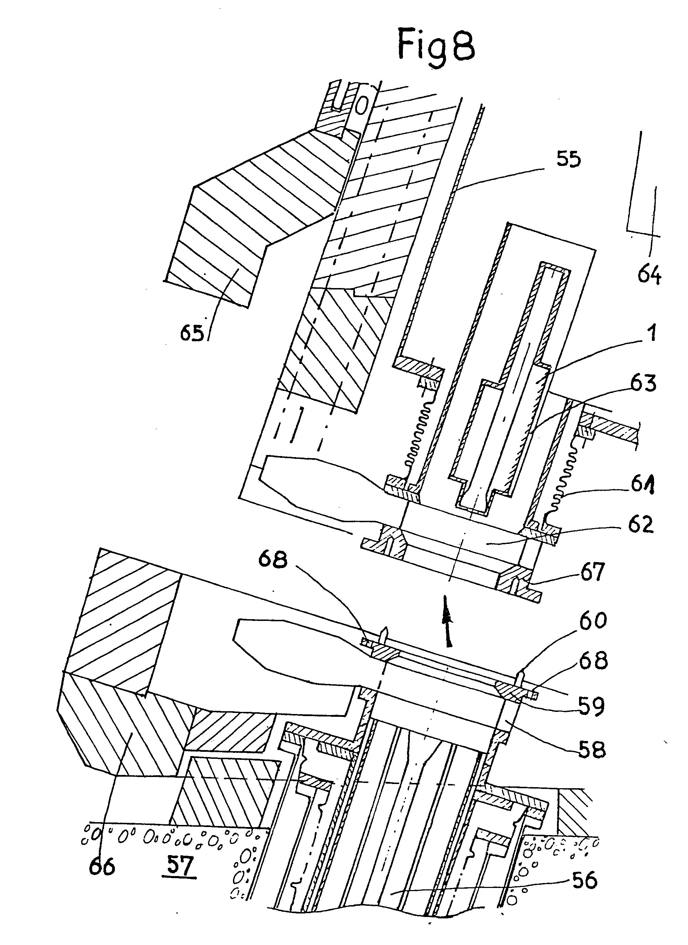

Sur les figures 7 et 8 on voit de façon plus détaillée l'ensemble des moyens de liaison et d'isolation du sas et de la rampe secondaire du réacteur.

Ces moyens de liaison et d'isolation sont placés au niveau des ouvertures de l'enceinte 55 permettant la mise en communication de celle-ci avec la rampe primaire ou avec la rampe secondaire.

Sur les figures 7 et 8 on a représenté les dispositifs de liaison et d'isolement permettant la mise en communication de l'enceinte avec la rampe secondaire 56 solidaire de la structure 57 du réacteur. La rampe 56 est solidaire d'un ensemble comportant une vanne d'isolement 58 et une bride de fixation 59 portant des pions de centrage 60.

L'enceinte 55 porte à sa partie inférieure, par l'intermédiaire d'un joint à soufflet 61, une vanne d'isolement 62 et un tronçon de rampe 63 fixe par rapport à l'enceinte 55, mis à part les légers déplacements ou déflections de cette rampe 63 par rapport à l'enceinte 55, obtenus par déformation du joint à soufflet 61 placé dans le prolongement de la rampe 56.

La rampe mobile 64 peut ensuite venir se placer dans le prolongement de la rampe 63 par basculement.

Sur la figure 7, la rampe 64 a été représentée dans sa position où elle est en communication avec la rampe secondaire 56 et à la figure 8, la rampe mobile 64 a été représentée dans une position où la rampe mobile et la rampe fixe ne sont plus dans le prolongement l'une de l'autre. La rampe mobile est déplaçable par basculement et rotation entre sa position représentée à la figure 7 et une position où la rampe mobile 64 est dans le prolongement d'un tronçon de rampe fixe non représenté permettant la jonction avec la rampe primaire du réacteur.

L'enceinte 55 est entourée par des éléments de protection contre les rayonnements 65 qui viennent lors de la mise en place du sas sur le réacteur dans le prolongement d'éléments de protection 66 solidaires de la structure 57 du réacteur, pour constituer avec ceux-ci une protection sur tout le pourtour du sas.

Une bride 67 est d'autre part solidaire de la vanne 62 à son extrémité inférieure venant en position en regard de la bride 59 solidaire de la vanne 58 disposée sur la structure fixe de soutien de la rampe secondaire sur le réacteur.

La bride 67 comporte des perçages permettant la mise en place des pions de centrage 60 lors de l'accostage du sas sur le réacteur.

Le sas amovible selon l'invention devant servir sur plusieurs réacteurs, par exemple disposés sur un même site, il est nécessaire de pouvoir adapter le dispositif de jonction de ce sas à de légères différences dimensionnelles pouvant exister entre deux réacteurs en ce qui concerne l'inclinaison ou la position des rampes primaire et secondaire. C'est la raison pour laquelle la rampe 63 solidaire de l'enceinte 55 est fixée sur celle-ci par l'intermédiaire d'un joint à soufflet 61 qui permet de légers déplacements ou déflections.

De cette manière on peut toujours faire coïncider les pions de centrage 60 de la bride 59 avec les perçages de la bride 67. Lorsque la mise en place des deux dispositifs de jonction et d'isolement correspondant à chacune des rampes primaire et secondaire est réalisée, on effectue la fixation du sas par serrage des brides 59 et 67 et des brides correspondantes au niveau de la rampe primaire. Pour cela, les rampes 59 et 67 comportent un certain nombre de perçages 68 dans lesquels on introduit des vis qui sont fixées par des écrous.

La rampe mobile 64 venant se placer par basculement par rapport à la rampe 63 dans le prolongement de celle-ci grâce à une butée arrêtant sa course à l'endroit voulu, la continuité des rampes est assurée entre la rampe mobile et les rampes primaire et secondaire du réacteur.

Une légère variation angulaire du déplacement de la rampe mobile permet d'absorber de légères déviations venant d'écarts entre les inclinaisons ou les entraxes des rampes d'un réacteur à un autre.

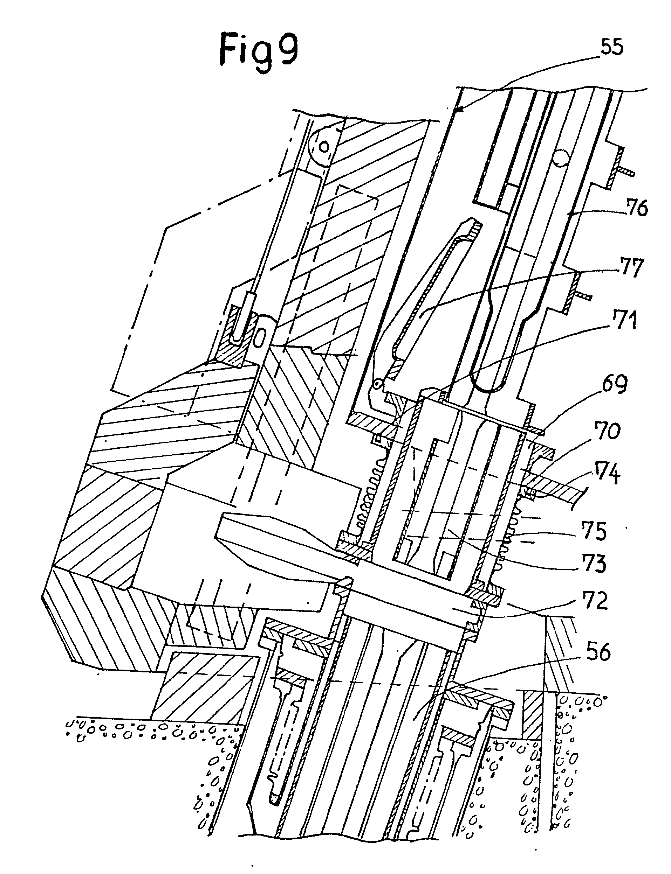

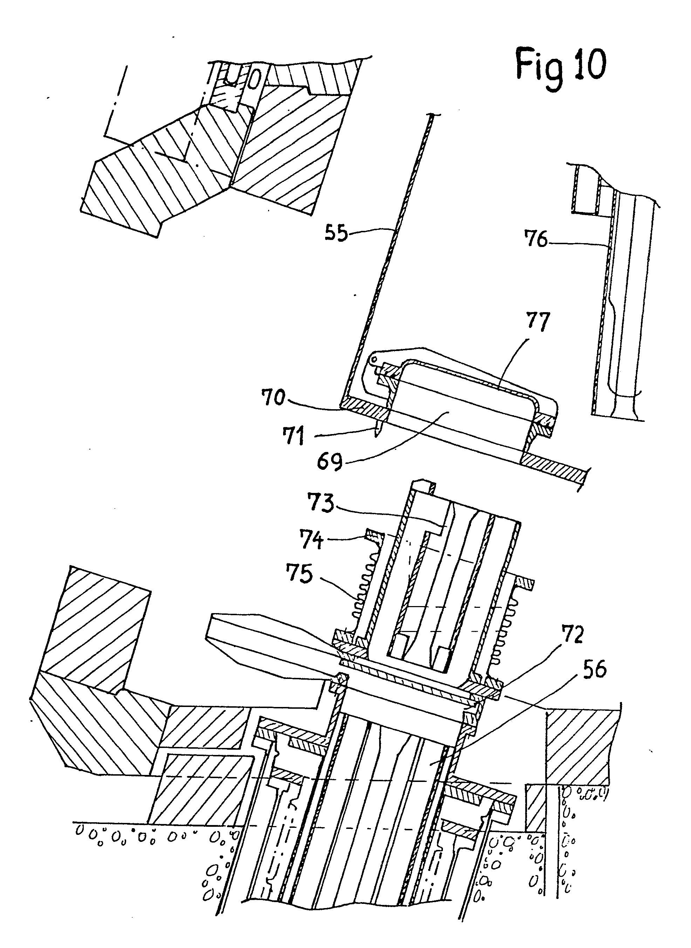

Sur les figures 9 et 10, on voit un autre mode de réalisation du dispositif de jonction et d'isolement entre l'enceinte 55 et la rampe secondaire 56, l'enceinte 55 portant au niveau de son ouverture 69 une bride 70 portant des pions de centrage 71.

L'extrémité supérieure de la rampe 56 porte une vanne 72 elle-même prolongée par une portion de rampe 73 cependant qu'une bride 74 comportant des perçages correspondant aux pions de centrage 71 est fixée sur la vanne 72 par l'intermédiaire d'un joint à soufflet 75.

De cette manière on peut rattraper des décalages angulaires ou d'entraxes entre les rampes et les ouvertures du sas lorsqu'on fait passer le sas d'un réacteur à un autre.

Dans ce cas, le basculeur 76 vient se mettre en position dans le prolongement de la portion de rampe 73 par basculement.

Un clapet interne 77 permet la fermeture de l'ouverture 69 lors de l'isolement du sas par rapport au milieu extérieur, pour son transport par exemple.

On voit que les principaux avantages du dispositif suivant l'invention sont de permettre de n'utiliser qu'un seul sas renfermant les dispositifs mobiles de chargement et de déchargement des assemblages pour un ensemble de réacteurs, ce qui permet d'économiser sur les coûts de construction du réacteur nucléaire, de faire fonctionner les mécanismes associés au sas de façon plus fréquente et de permettre la maintenance aisée du sas pendant le fonctionnement du réacteur.

D'autre part entre les périodes d'utilisation du sas sur le réacteur nucléaire, un espace important se trouve disponible au-dessus de la cuve du réacteur dans le bâtiment de celui-ci.

Mais l'invention ne se limite pas aux modes de réalisation qui ont été décrits ; elle en comporte au contraire toutes les variantes.

C'est ainsi que la forme de l'enceinte constituant le sas n'est pas limitée aux formes qui ont été décrites et représentées, que le mode de fixation et d'isolement du sas peut être différent des modes de fixation et d'isolement qui ont été décrits et que la réalisation de la protection contre les rayonnements peut être obtenue d'une façon différente des modes particuliers décrits.

Enfin, le dispositif de chargement et de déchargement suivant l'invention est utilisable pour tous les réacteurs nucléaires à neutrons rapides utilisant un sas faisant passer les éléments combustibles d'une rampe primaire communiquant avec la cuve du réacteur à une rampe secondaire communiquant avec un point de stockage ou de chargement des assemblages combustibles.

**Revendications**

1. Installation de production d'énergie comportant plusieurs réacteurs nucléaires à neutrons rapides implantés sur un même site comportant chacun une cuve (2) renfermant le cœur du réacteur immergé dans du sodium liquide de refroidissement, une structure (1) supportant la cuve (2), une rampe primaire (28) de chargement et de déchargement des assemblages combustibles du cœur communiquant avec la cuve du réacteur et une rampe secondaire (29) communiquant avec une zone destockage ou de chargement des assemblages, ces rampes primaire et secondaire portées par la structure (1) étant munies à leurs extrémités de moyens d'isolation (32, 33) l'installation comprenant un dispositif de chargement et de déchargement d'assemblages combustibles constitué par un sas (25) reposant sur la structure (1) d'un réacteur, à l'intérieur duquel sont fixés un moyen de transfert (35) constitué par au moins une rampe mobile entre une position en communication avec la rampe primaire (28) et une position en communication avec la rampe secondaire (29) grâce à des moyens moteurs (36) et au moins un dispositif relié à la rampe mobile (35) de déplacement des assemblages à l'intérieur des rampes (28, 29), caractérisée par le fait que le dispositif de chargement et de déchargement est amovible dans son ensemble, le sas (25) étant constitué par une enceinte démontable, transportable et comportant des moyens de liaison et d'isolation (30, 31), au niveau d'ouvertures (26, 27) pratiquées dans sa paroi pour sa mise en communication avec les rampes primaire et secondaire (28, 29) d'un réacteur au niveau des extrémités de ces rampes munies des moyens d'isolation (32, 33).

2. Installation suivant la revendication 1, caractérisée par le fait que l'enceinte démontable et transportable (25) est constituée par une enveloppe métallique fermée, et recouverte par des éléments de protection (34) contre les radiations.

3. Installation suivant la revendication 2, caractérisée par le fait que les éléments de protection contre les radiations (41, 42) sont amovibles par rapport à l'enceinte métallique (25), le transport de cette enceinte (25) étant effectué sans les éléments de protection (41, 42).

4. Installation suivant la revendication 2, caractérisée par le fait que les éléments de protection (51) sont fixés sur le réacteur de façon permanente et que l'enceinte (45) de forme cylindrique peut être introduite à l'intérieur de ces éléments de protection (51).

5. Installation suivant l'une quelconque des revendications 1, 2, 3 et 4, caractérisée par le fait que les moyens de liaison et d'isolation du dispositif de chargement et de déchargement sont constitués par une vanne (62) et une bride (67) reliées à l'enceinte (55) par un joint déformable (61), une portion de rampe (63) destinée à coopérer avec la rampe mobile (64), par l'intermédiaire d'une butée étant également solidaire de l'enceinte (55) par l'intermédiaire du joint déformable (61), pour permettre l'alignement des rampes primaire et secondaire du réacteur et de la rampe mobile (64), même en cas de différences dans l'orientation et l'écartement des rampes, d'un réacteur nucléaire à un autre entre lesquels on transporte le dispositif de chargement et de déchargement.

6. Installation suivant l'une quelconque des revendications 1, 2, 3 et 4, caractérisée par le fait que les moyens de liaison et d'isolation du dispositif de transfert sont constitués par une bride (70) solidaire de l'enceinte (55) et par un clapet (77) disposé à l'intérieur de celle-ci, les rampes solidaires de la structure du réacteur portant une bride (74) correspondant à la bride (70) de l'enceinte portée par l'intermédiaire d'un joint déformable (75).

7. Installation suivant l'une quelconque des revendications 5 et 6, caractérisée par le fait que le joint déformable (61, 75) est constitué par un joint à soufflet ayant pour axe l'axe commun des rampes à mettre en alignement.

**Claims**

1. Installation for producing energy, comprising several fast neutron nuclear reactors located on the same site, each comprising a vessel (2) enclosing the reactor core which is immersed in liquid sodium for cooling, a structure (1) supporting the vessel (2), a primary ramp (28) for loading and unloading fuel assemblies into and of the core communicating with the reactor vessel, and a secondary ramp (29) communicating with an area for storing or loading assemblies, these primary and secondary ramps, carried by the structure (1) being provided at their ends with means of separation (32, 33), the installation comprising a device for loading and unloading fuel assemblies which consists of an interlock chamber (25) resting on a reactor structure (1), inside which chamber are fixed a means of transfer (35) consisting of at least one ramp which is movable between a position in communication with the primary ramp (28) and a position in communication with the secondary ramp (29) by virtue of means of driving (36) and at least one device connected to the movable ramp (35) for moving assemblies inside the ramps (28, 29), characterised in that the device for loading and unloading is capable of being detached as a unit, the interlock chamber (25) consisting of an enclosure which can be demounted and transported and incorporates means for coupling and separating (30, 31) in the region of openings (26, 27) provided in its wall for placing it in communication with the primary and secondary ramps (28, 29) of a reactor in the region of the ends of these ramps which are equipped with means of separation (32, 33).

2. Installation according to Claim 1, characterised in that the enclosure which can be demounted and transported (25) consists of a closed metal casing, and is covered with components for protection (34) against radiations.

3. Installation according to Claim 2, characterised in that the components for protection against radiations (41, 42) are capable of being detached from the metal enclosure (25), the transport of this enclosure (25) being carried out without the protective components (41, 42).

4. Installation according to Claim 2 characterised in that the protective components (51) are fixed to the reactor in a permanent manner and the enclosure (45) of a cylindrical shape can be introduced inside these protective components (51).

5. Installation according to any one of Claims 1, 2, 3 and 4, characterised in that the means for coupling and separating the device for loading and unloading consist of a valve (62) and a flange (67) which are connected to the enclosure (55) by a deformable seal (61), a ramp part (63) intented to co-operate with the movable ramp (64) by means of an end-stop being also united with the enclosure (55) by means of the deformable seal (61), to permit the alignment of the primary and secondary ramps of the reactor and of the movable ramp (64), even in the event of differences in the direction and the separation of the ramps, of a nuclear reactor relative to another between which reactors the device for loading and unloading is transported.

6. Installation according to any one of Claims 1, 2, 3 and 4, characterised in that the means for coupling and separating the transfer device consist of a flange (70) fixed solidly ot the enclosure (55) and of a valve (77) arranged inside the latter, the ramps which are fixed solidly to the reactor structure carrying a flange (74) corresponding to the flange (70) of the enclosure carried by means of a deformable seal (75).

7. Installation according to either one of Claims 5 and 6, characterised in that the deformable seal (61, 75) consists of a bellows seal having as its axis the common axis of the ramps which are to be placed in alignment.

**Ansprüche**

1. Energieerzeugungsanlage bestehend aus mehreren auf ein und demselben Gelände errichteten schnellen Neutronenkernreaktoren mit jeweils einem Druckbehälter (2), der den in kühlendem Flüssignatrium eingetauchten Reaktorkern aufnimmt, einer den Druckbehälter (2) abstützenden Struktur (1), einem mit dem Reaktordruckbehälter in Verbindung stehenden schrägen Primärrohr (28) zum Be- und Entladen der Brennelementbündel des Kerns und einem mit einer Lageroder Entladezone der Brennelementbündel in Verbindung stehenden schrägen Sekundärrohr (29), wobei diese über die Struktur (1) abgestützten Primär- und Sekundärrohre an ihren Enden Isolierungsmittel (32, 33) aufweisen, wobei die Anlage zum Be- und Entladen der Brennelementbündel eine Vorrichtung aus einer auf der Struktur (1) sich abstützenden Schleusenkammer (25) mit einem darin befestigten Übergabemittel (35) umfasst, das mindestens aus einem Rohr besteht, welches über motorische Mittel (36) zwischen einer mit dem Primärrohr (28) in Verbindung stehenden Lage und einer mit dem Sekundärrohr (29) in Verbindung stehenden Lage beweglich ist, sowie aus mindestens einer Vorrichtung, die mit dem beweglichen Rohr (35) zum Verschieben der Brennelementbündel innen in den Rohren (28, 29) verbunden ist, dadurch gekennzeichnet, daß die Be- und Entladevorrichtung als Einheit umsetzbar ist, wobei die Schleusenkammer (25) aus einer abnehmbaren und transportierbaren Ummantelung besteht und bei den in deren Wand vorgesehenen Öffnungen (26, 27) Verbindungs- und Isolierungsmittel (30, 31) umfaßt zur Herstellung der Verbindung mit den Primär- und Sekundärrohren (28, 29) eines Reaktors an den Enden dieser mit Isolierungsmitteln (32, 33) versehenen Rohre.

2. Anlage nach Anspruch 1, dadurch gekennzeichnet, daß die abnehmbare und transportierbare Ummantelung (25) aus einem geschlossenen Metallmantel besteht und mit Schutzelementen (34) gegen Strahlungen bedeckt ist.

3. Anlage nach Anspruch 2, dadurch gekennzeichnet, daß die Schutzelemente gegen Strahlungen (41, 42) von dem Metallmantel (25) abnehmbar sind, wobei diese Ummantelung (25) ohne die Schutzelemente (41, 42) transportiert wird.

4. Anlage nach Anspruch 2, dadurch gekennzeichnet, daß die Schutzelemente (51) dauerhaft an dem Reaktor angebracht sind, und daß die zylinderförmige Ummantelung (45) in diese Schutzelemente (51) einführbar ist.

5. Anlage nach einem der Ansprüche 1, 2, 3 und 4, dadurch gekennzeichnet, daß die Verbindungs- und Isolierungsmittel der Be- und Entladevorrichtung aus einem Schieber (62) und einem Flansch (67) bestehen, die über eine verformbare Dichtung (61) mit der Unmantelung (55) verbunden sind, wobei ein über einen Anschlag mit dem beweglichen Rohr (64) zusammenwirkendes Rohrteil (63) ebenfalls über die verformbare Dichtung (61) mit der Ummantelung (55) fest verbunden ist, zwecks Ausrichtung der Primär- und Sekundärrohre des Reaktors und des beweglichen Rohrs (64) auch bei auftretenden Unterschieden in der Rohrrichtung und -abstand von einem Reaktor zum anderen, zwischen denen die Be- und Entladevorrichtung transportiert wird.

6. Anlage nach einem der Ansprüche 1, 2, 3 und 4, dadurch gekennzeichnet, daß die Verbindungs- und Isolierungsmittel der Übergabevorrichtung aus einem an der Ummantelung (55) befestigten Flansch (70) und einer darin angeordneten Klappe (77) bestehen, wobei die mit der Reaktorstruktur fest verbundenen Rohre einen Flansch (74) tragen, der dem über eine verformbare Dichtung (75) getragene Flansch (70) der Ummantelung entspricht.

7. Anlage nach einem der Ansprüche 5 und 6, dadurch gekennzeichnet, daß die verformbare Dichtung (61, 75) eine Balgendichtung ist, deren Achse der gemeinsamen Achse der auszurichtenden Rohre entspricht.

# Fig 1

Fig3

Fig4

Fig2

Fig 6

Fig 5

Fig 7

# Fig 8

# Fig 9

Fig 10

55

76

77

70

71

69

73

74

75

72

56